# EUROPEAN PATENT APPLICATION

(11) **EP 4 495 191 A1**
(43) Date of publication of application: **22.01.2025**
(21) Application number: 23770736.9
(22) Date of filing: 13.03.2023
(51) Int. Cl.: C09D 4/00, C09D 17/00, C09D 7/45, C09D 7/61, C09C 1/00, C09C 3/04

(54) **SLURRY COMPOSITION AND COATING AGENT**

(30) Priority: 17.03.2022 JP 2022042579
(71) Applicant: Niterra Co., Ltd., Nagoya-shi, Aichi 461-0005 (JP)
(72) Inventor: OKIMURA Yasuyuki, Nagoya-shi, Aichi 461-0005 (JP); SHOJI Mao, Nagoya-shi, Aichi 461-0005 (JP); KOZUKA Hisashi, Nagoya-shi, Aichi 461-0005 (JP); IWATA Masaya, Nagoya-shi, Aichi 461-0005 (JP); MURAI Ryota, Nagoya-shi, Aichi 461-0005 (JP); OKAYAMA Hiroki, Nagoya-shi, Aichi 461-0005 (JP)
(74) Representative: Zimmermann & Partner Patentanwälte mbB
(86) International application number: PCT/JP2023/009644
(87) International publication number: WO 2023/176781

(57) **Abstract**

A slurry composition of the present invention contains: particles of a complex oxide containing La and at least one element selected from the group consisting of Mo and W; and a dispersion medium, a central particle diameter of the particles is not greater than 800 nm, and a content of the particles is 0.1 to 10 mass%.

## Description

### TECHNICAL FIELD

The present invention relates to a slurry composition and a coating agent.

### BACKGROUND ART

As described in Patent Document 1, ceramics composed of a complex oxide containing a rare earth element and molybdenum (Mo) or the like are known as a new type of inorganic material having antibacterial and antiviral properties. Among such ceramics, ceramics composed of a complex oxide (e.g., La₂Mo₂O₉) containing lanthanum (La) as a rare earth element have attracted particular attention since these ceramics are advantageous for industrial production because of the use of lanthanum, which is inexpensive and readily available among rare earth elements.

Patent Document 1 indicates that, for example, a ceramic powder of a complex oxide containing lanthanum and molybdenum is combined with a known binder resin, a solvent, etc., and applied as an ink or paste to the surface of a desired article, thereby forming a film containing the complex oxide ceramic.

### RELATED ART DOCUMENT

Patent Document 1: International Publication WO 2020/017493

### Problem to be Solved by the Invention

Hitherto, antibacterial property or antiviral property has been imparted, for example, by slurrying a powder having antibacterial property or antiviral property such as silver powder, and using the slurry as a coating agent, or mixing the slurry into a paint.

However, no such study has been conducted on the above-described ceramic powders of the complex oxide containing lanthanum and molybdenum and the like. The specific gravity of the complex oxide containing lanthanum and molybdenum is 5.5 /cm³, which is relatively large, and thus there is a problem that the powder has a high sedimentation rate and solid-liquid separation quickly occurs.

### DISCLOSURE OF THE PRESENT INVENTION

An object of the present invention is to provide a slurry composition and a coating agent in which the sedimentation rate of La-based composite oxide particles is decreased.

### Means for Solving the Problem

As a result of thorough studies conducted in order to attain the above object, the present inventors have found that when the central particle diameter of particles of a complex oxide containing at least one element selected from the group consisting of Mo and W is not greater than 800 nm and the content of the particles is 0.1 to 10 mass%, the sedimentation rate of the particles is decreased and the particles become capable of being applied to the target object, and thus the present inventors have completed the present invention.

### The means for solving the problem are as follows.

<1> A slurry composition containing: particles of a complex oxide containing La and at least one element selected from the group consisting of Mo and W; and a dispersion medium, wherein a central particle diameter of the particles is not greater than 800 nm, and a content of the particles is 0.1 to 10 mass%.
<2> The slurry composition according to <1> above, wherein the complex oxide is La₂MoₓW_{(2-X)}O₉ (0 ≤ x ≤ 2).
<3> The slurry composition according to <1> or <2> above, further containing a binder.
<4> The slurry composition according to any one of <1> to <3> above, further containing a dispersing agent.
<5> The slurry composition according to any one of <1> to <4> above, further containing an ultraviolet-curable resin.
<6> A coating agent containing the slurry composition according to any one of <1> to <5> above.

### Advantageous Effect of the Invention

According to the present invention, it is possible to provide a slurry composition and a coating agent in which the sedimentation rate of La-based composite oxide particles is decreased.

### BRIEF DESCRIPTION OF THE DRAWINGS

FIG. 1 shows an SEM image of La-Mo-based composite oxide particles of Example 2.
FIG. 2 shows appearance photographs of slurry compositions of Examples 1 and 2.
FIG. 3 shows an appearance photograph of a vial filled with a slurry composition of Comparative Example 1.
FIG. 4 shows an appearance photograph of a slurry composition of Example 15.
FIG. 5 shows a graph of the transmittance (%) of the slurry composition of Example 2.
FIG. 6 shows an SEM image of La-Mo-based composite oxide particles of Comparative Example 2.

### BEST MODE FOR CARRYING OUT THE INVENTION

A slurry composition of an embodiment is a liquid composition containing particles of an La-based composite oxide and a dispersion medium.

In the present specification, a complex oxide containing La and at least one element selected from the group consisting of Mo and W is referred to as "La-based composite oxide". Such an La-based composite oxide has excellent antibacterial and antiviral properties.

The La-based composite oxide is represented, for example, by La₂MoₓW_{(2-X)}O₉ (0 ≤ x ≤ 2).

Specific examples of the La-based composite oxide include an La-Mo-based composite oxide, an La-Mo-W-based composite oxide, and an La-W-based composite oxide.

From the viewpoint of antibacterial property, antiviral property, etc., the La-Mo-based composite oxide preferably contains Mo as the element. That is, as the La-based composite oxide, those represented by La₂MoₓW_{(2-X)}O₉ (0 < x ≤ 2) are preferable.

In the present specification, particles of the La-based composite oxide (i.e., La-based composite oxide in particle form) are referred to as "La-based composite oxide particles".

In the present specification, a complex oxide of lanthanum (La) and molybdenum (Mo) is referred to as "La-Mo-based composite oxide", and particles of the La-Mo-based composite oxide (i.e., La-Mo-based composite oxide in particle form) are referred to as "La-Mo-based composite oxide particles".

In the present specification, a complex oxide of lanthanum (La), molybdenum (Mo), and tungsten (W) is referred to as "La-Mo-W-based composite oxide", and particles of the La-Mo-W-based composite oxide (i.e., La-Mo-W-based composite oxide in particle form) are referred to as "La-Mo-W-based composite oxide particles".

In the present specification, a complex oxide of lanthanum (La) and tungsten (W) is referred to as "La-W-based composite oxide", and particles of the La-W-based composite oxide (i.e., La-W-based composite oxide in particle form) are referred to as "La-W-based composite oxide particles".

The central particle diameter of the La-based composite oxide particles is not greater than 800 nm, preferably not greater than 600 nm, more preferably not greater than 150 nm, and further preferably not greater than 100 nm. When the central particle diameter of the La-based composite oxide particles is in such a range, the sedimentation rate of the La-based composite oxide particles in the dispersion medium is sufficiently decreased, whereby the dispersibility of the La-based composite oxide particles is improved, and it becomes possible to apply the slurry composition to a target object.

The central particle diameter of the La-based composite oxide particles is obtained as a particle diameter (D50) at which the cumulative frequency by a laser diffraction method reaches 50%. A specific method for measuring the central particle diameter using a laser diffraction particle size distribution measuring device will be described below.

In the measurement of the central particle diameter using the particle size distribution measuring device, if the measurement result is below the lower limit value of the measurement limit, an accurate particle diameter (central particle diameter) cannot be obtained. Therefore, if the measurement result by the particle size distribution measuring device is 100 nm or less, the particle diameter is measured using an FE-SEM (Field Emission-Scanning Electron Microscope) in addition to the measurement method using the particle size distribution measuring device. In the measurement method using the FE-SEM, for example, the La-based composite oxide powder in the slurry composition may be adhered onto the surface of an appropriate target object, and the particle diameter may be obtained from the La-based composite oxide powder contained in the adhered matter. A specific method for measuring the particle diameter using the FE-SEM will be described later.

The La-Mo-based composite oxide is not particularly limited as long as the object of the present invention is not impaired, and an example thereof is La₂Mo₂O₉. The La-Mo-based composite oxide may be composed of only La₂Mo₂O₉, or may contain a material other than La₂Mo₂O₉.

The La-Mo-W-based composite oxide is not particularly limited as long as the object of the present invention is not impaired, and examples thereof include La₂MoWO₉, La₂Mo_{1.5}W_{0.5}O₉, La₂Mo_{0.5}W_{1.5}O₉, etc. These composite oxides may be used individually, or two or more of these composite oxides may be used in combination.

The La-W-based composite oxide is not particularly limited as long as the object of the present invention is not impaired, and an example thereof is La₂W₂O₉. The La-W-based composite oxide may be composed of only La₂W₂O₉, or may contain a material other than La₂W₂O₉.

The La-based composite oxide particles such as La-Mo-based composite oxide particles are produced, for example, through a preparation step, a first firing step, and a milling step.

In the case where the La-based composite oxide particles are La-Mo-based composite oxide particles, the preparation step is a step of mixing a lanthanum compound and a molybdenum compound to prepare a mixed powder.

In the case where the La-based composite oxide particles are La-Mo-W-based composite oxide particles, the preparation step is a step of mixing the lanthanum compound, the molybdenum compound, and a tungsten compound to prepare a mixed powder.

In the case where the La-based composite oxide particles are La-W-based composite oxide particles, the preparation step is a step of mixing the lanthanum compound and the tungsten compound to prepare a mixed powder.

The lanthanum compound is a compound containing lanthanum (La) necessary to produce the La-based composite oxide such as an La-Mo-based composite oxide, and examples thereof include La(OH)₃, La₂O₃, La₂(CO₃)₃, etc. As the lanthanum compound, for example, at least one compound selected from the group consisting of La(OH)₃, La₂O₃, and La₂(CO₃)₃ may be used. As the lanthanum compound, La(OH)₃ is preferable.

The molybdenum compound is a compound containing molybdenum (Mo) necessary to produce the La-Mo-based composite oxide or the La-Mo-W-based composite oxide, and examples thereof include MoO₃, MoO₂, MoO, Mo(OH)₃, Mo(OH)₅, etc. As the molybdenum compound, for example, at least one compound selected from the group consisting of MoO₃, MoO₂, MoO, Mo(OH)₃, and Mo(OH)₅ may be used. As the molybdenum compound, MoO₃ is preferable.

The tungsten compound is a compound containing tungsten (W) necessary to produce the La-Mo-W-based composite oxide or the La-W-based composite oxide, and examples thereof include WO₃, WO₂, and W₂O₃. As the tungsten compound, WO₃ is preferable.

The mixing ratio of the lanthanum compound and the molybdenum compound in the production of the La-Mo-based composite oxide is preferably adjusted such that La : Mo = 1 : 1 as a mole ratio.

The mixing ratio of the lanthanum compound, the molybdenum compound, and the tungsten compound in the production of the La-Mo-W-based composite oxide is preferably adjusted such that La : Mo : W = 2 : 1.5 to 0.5 : 0.5 to 1.5 as a mole ratio.

The mixing ratio of the lanthanum compound and the tungsten compound in the production of the La-W-based composite oxide is preferably adjusted such that La: W = 2 : 1.5 to 0.5 : 0.5 to 1.5 as a mole ratio.

The raw materials of the La-based composite oxide such as the lanthanum compound, the molybdenum compound, and the tungsten compound are powders, and these raw materials may be mixed with each other as powders, or may be wet-mixed by adding a solvent such as a lower alcohol (ethanol) to these powders. The mixing of the raw materials may be performed by wet-mixing using, for example, alumina balls (alumina cobbles) or the like. The wet-mixed mixture (wet-mixture) is dried as appropriate by hot water drying, spray drying, or the like.

By such a preparation step, a mixed powder of the lanthanum compound and the molybdenum compound, a mixed powder of the lanthanum compound, the molybdenum compound, and the tungsten compound, or a mixed powder of the lanthanum compound and the tungsten compound is obtained.

The first firing step is a step of firing the mixed powder obtained in the preparation step, in order to react the lanthanum compound, the molybdenum compound, etc., in the mixed powder. In the first firing step, the mixed powder is fired, for example, under a temperature condition of not lower than 500°C and not higher than 900°C for 1 hour or longer. The first firing step does not need to be performed in a special synthetic air atmosphere, but is performed in a normal atmospheric pressure atmosphere.

In the case where the mixed powder is a mixed powder of the lanthanum compound and the molybdenum compound, the lanthanum compound and the molybdenum compound in the mixed powder react in the first firing step to obtain an La-Mo-based composite oxide containing La₂Mo₂O₉, etc.

In the case where the mixed powder is a mixed powder of the lanthanum compound, the molybdenum compound, and the tungsten compound, the lanthanum compound, the molybdenum compound, and the tungsten compound in the mixed powder react to obtain an La-Mo-W-based composite oxide containing La₂MoWO₉, etc.

In the case where the mixed powder is a mixed powder of the lanthanum compound and the tungsten compound, the lanthanum compound and the tungsten compound in the mixed powder react to obtain an La-W-based composite oxide containing La₂W₂O₉, etc.

The milling step is a step of milling the La-based composite oxide after the first firing using a medium-stirring milling device such as a bead mill such that the central particle diameter thereof is within a predetermined range. Various conditions, such as milling time, are set as appropriate such that the central particle diameter of the La-based composite oxide is within the predetermined range.

As described above, the La-based composite oxide particles such as La-Mo-based composite oxide particles having a predetermined central particle diameter, which are used in the slurry composition, are obtained.

The obtained La-based composite oxide particles may be granulated if necessary. For example, a slurry is prepared by performing wet-mixing and milling using alumina balls or the like while adding a solvent such as ethanol to the La-based composite oxide particles, and a dried product of the slurry is passed through a sieve having a predetermined mesh size to obtain La-based composite oxide particles granulated to a predetermined size.

As long as the present invention is not impaired, a product (milled product) obtained by milling an obtained sintered body after the La-based composite oxide particles are sintered may be used as "La-based composite oxide particles" used in the slurry composition. The sintered body is obtained, for example, by molding the La-based composite oxide particles before sintering into a predetermined shape and firing the obtained molded body under a predetermined temperature condition (e.g., 900°C or higher). In the present specification, a firing step performed in order to sinter the La-based composite oxide particles is referred to as "second firing step". This second firing step can be performed in an air atmosphere. The La-based composite oxide obtained after the second firing step is adjusted to a particle shape having a central particle diameter in a predetermined range by a milling step, if necessary.

As the dispersion medium used in the slurry composition, water, ethanol, isopropyl alcohol (IPA), methyl ethyl ketone (MEK), ethyl acetate, toluene, etc., are used. These dispersion media may be used individually, or two or more of these dispersion media may be used in combination.

The content of the La-based composite oxide particles in the slurry composition is 0.1 to 10 mass%.

The slurry composition may contain other components in addition to the La-based composite oxide particles and the dispersion medium, as long as the object of the present invention is not impaired.

Examples of the other components (blending material) include a binder, a dispersing agent, an ultraviolet-curable resin, a coloring agent (pigment, dye), etc. In addition, components other than these may be used as the other components.

The binder is used for the purpose of, for example, improving the adhesion, of the La-based composite oxide particles contained in the slurry composition, to the target object. Such a binder is not particularly limited as long as the object of the present invention is not impaired, and examples thereof include polyvinyl alcohol (PVA), polyvinyl butyral (PVB), etc. These binders may be used individually, or two or more of these binders may be used in combination.

The content of the binder in the slurry composition is not particularly limited as long as the object of the present invention is not impaired, and is, for example, preferably 0.05 to 5 mass% with respect to the La-based composite oxide particles.

The dispersing agent is used for the purpose of, for example, enhancing the dispersibility of the La-based composite oxide particles in the dispersing agent. Such a dispersing agent is not particularly limited as long as the object of the present invention is not impaired, and examples thereof include water-soluble acrylic acidbased dispersing agents, anionic surfactants, cationic surfactants, nonionic surfactants, polyethylene glycol (PEG)-polypropylene glycol (PPG) block polymers, ammonium polyacrylate salts, polycarboxylic acid copolymers having alkyl chains or polyalkylene glycol (PAG) chains, etc. These dispersing agents may be used individually, or two or more of these dispersing agents may be used in combination.

The content of the dispersing agent in the slurry composition is not particularly limited as long as the object of the present invention is not impaired, and is, for example, preferably not greater than 5 mass% with respect to the La-based composite oxide particles.

The slurry composition of the present embodiment can be used as a coating agent when containing a curing agent. As the curing agent, any curing agent can be selected, such as a curing agent obtained by dissolving a synthetic resin in a volatile solvent, a moisture-curing type curing agent, a two-component mixture type curing agent, and an ultraviolet-curing type curing agent, as long as the object of the present invention is not impaired. The curing agent is used for the purpose of, for example, improving the adhesion, of the La-based composite oxide particles contained in the slurry composition, to the target object. Examples of an ultraviolet-curable resin used in the ultraviolet-curing type curing agent include an acrylic ultraviolet-curable resin, etc.

The content of the ultraviolet-curable resin in the slurry composition is not particularly limited as long as the object of the present invention is not impaired, and is, for example, preferably not greater than 5 mass% with respect to the La-based composite oxide particles.

The slurry composition (coating agent) of the present embodiment may contain a pigment. The pigment is used for the purpose of, for example, coloring a coating film formed on the surface of the target object and containing the La-based composite oxide particles. The pigment may be water-based or may be oil-based. The pigment is not particularly limited, and examples thereof include carbon black, synthetic resins, metal powders, minerals, etc. These pigments may be used individually, or two or more of these pigments may be used in combination.

The target object to which the slurry composition is applied is not particularly limited. Examples of the material forming the target object include glass, ceramics, synthetic resins such as thermoplastic resins and thermosetting resins, rubbers (natural rubber, synthetic rubber), genuine leather (natural leather), synthetic leather, metal-based materials composed of metals or alloys, wood, paper, fibers, nonwoven fabrics, silicon (silicon wafer, etc.), carbon materials, minerals, etc.

As a method for applying the slurry composition to the target object, for example, a brush, a roller, blade casting, or dipping can be used. As a method for drying the slurry composition after the slurry composition is applied to the target object, a known method such as natural drying and heating in a drying furnace can be used. At this time, it is preferable to select a method that suppresses aggregation of the La-based composite oxide particles.

Hereinafter, the present invention will be described in further detail based on examples. The present invention is not limited to these examples in any way.

### [Example 1]

La(OH)₃ was prepared as the lanthanum compound, and MoO₃ was prepared as the molybdenum compound. Then, a raw material powder of the lanthanum compound and a raw material powder of the molybdenum compound were each weighed such that the mole ratio thereof was 1 : 1 (La : Mo = 1 : 1). After weighing, each raw material powder was mixed with a predetermined amount of ethanol and the obtained wet-mixture was dried to obtain a mixed powder.

Then, the mixed powder was fired under a temperature condition of 700°C for 10 hours in an air atmosphere to obtain a fired powder composed of a reaction product of the lanthanum compound and the molybdenum compound.

Then, the obtained fired powder was milled in a bead mill for 4.5 hours to obtain La-Mo-based composite oxide particles. The central particle diameter of the La-Mo-based composite oxide particles of Example 1 was not greater than 100 nm. A method for measuring the central particle diameter will be described later.

The La-Mo-based composite oxide particles were blended into water (dispersion medium) such that the solid concentration of a finally obtained slurry composition was 1 mass%, and the mixture of these materials was stirred to obtain a slurry composition of Example 1.

### [Example 2]

A slurry composition of Example 2 was obtained in the same manner as in Example 1, except that a dispersing agent was blended (1 mass% with respect to the La-Mo-based composite oxide particles).

### [Example 3]

A slurry composition of Example 3 was obtained in the same manner as in Example 1, except that a binder and a dispersing agent were blended (0.1 mass% (binder) and 1 mass% (dispersing agent) with respect to the La-Mo-based composite oxide particles).

### [Example 4]

A slurry composition of Example 4 was obtained in the same manner as in Example 1, except that an ultraviolet-curable resin and a dispersing agent were blended (0.1 mass% (ultraviolet-curable resin) and 1 mass% (dispersing agent) with respect to the La-Mo-based composite oxide particles).

### [Example 5]

A slurry composition of Example 5 was obtained in the same manner as in Example 1, except that the La-Mo-based composite oxide particles were blended into water (dispersion medium) such that the solid concentration of a finally obtained slurry composition was 8 mass%, and a dispersing agent was blended (1 mass% with respect to the La-Mo-based composite oxide particles).

### [Example 6]

A fired powder was produced in the same manner as in Example 1, and the fired powder was milled in a pot mill for 90 hours to obtain La-Mo-based composite oxide particles of Example 6. The central particle diameter of the La-Mo-based composite oxide particles of Example 6 was 600 nm. A method for measuring the central particle diameter will be described later.

The La-Mo-based composite oxide particles of Example 6 were blended into water (dispersion medium) such that the solid concentration of a finally obtained slurry composition was 1 mass%, a dispersing agent was further blended (1 mass% with respect to the La-Mo-based composite oxide particles), and the mixture of these materials was stirred to obtain a slurry composition of Example 6.

### [Example 7]

A fired powder was produced in the same manner as in Example 1, and the fired powder was milled in a bead mill for 4.5 hours to obtain La-Mo-based composite oxide particles of Example 7. The central particle diameter of the La-Mo-based composite oxide particles of Example 6 was 150 nm.

The La-Mo-based composite oxide particles were blended into ethanol (dispersion medium) such that the solid concentration of a finally obtained slurry composition was 1 mass%, a dispersing agent was further blended (1 mass% with respect to the La-Mo-based composite oxide particles), and the mixture of these materials was stirred to obtain a slurry composition of Example 7.

### [Example 8]

A fired powder was produced in the same manner as in Example 1, and the fired powder was milled in a pot mill for 75 hours to obtain La-Mo-based composite oxide particles of Example 8. The central particle diameter of the La-Mo-based composite oxide particles of Example 8 was 800 nm.

The La-Mo-based composite oxide particles were blended into water (dispersion medium) such that the solid concentration of a finally obtained slurry composition was 1 mass%, a dispersing agent was further blended (1 mass% with respect to the La-Mo-based composite oxide particles), and the mixture of these materials was stirred to obtain a slurry composition of Example 8.

### [Example 9]

A fired powder was produced in the same manner as in Example 1, and the provisionally fired powder was milled in a pot mill for 70 hours to obtain La-Mo-based composite oxide particles of Example 9. The central particle diameter of the La-Mo-based composite oxide particles of Example 9 was 800 nm.

The La-Mo-based composite oxide particles were blended into water (dispersion medium) such that the solid concentration of a finally obtained slurry composition was 10 mass%, a dispersing agent was further blended (1 mass% with respect to the La-Mo-based composite oxide particles), and the mixture of these materials was stirred to obtain a slurry composition of Example 9.

### [Example 10]

La(OH)₃ was prepared as the lanthanum compound, MoO₃ was prepared as the molybdenum compound, and WO₃ was prepared as the tungsten compound. Then, a raw material powder of the lanthanum compound, a raw material powder of the molybdenum compound, and a raw material powder of the tungsten compound were each weighed such that the mole ratio thereof was 2 : 1 : 1 (La : Mo : W = 2 : 1 : 1). After weighing, each raw material powder was mixed with predetermined ethanol and the obtained wet-mixture was dried to obtain a mixed powder.

Then, the mixed powder was fired under a temperature condition of 650°C for 10 hours in an air atmosphere to obtain a fired powder composed of a reaction product of the lanthanum compound, the molybdenum compound, and the tungsten compound.

Then, the obtained fired powder was milled in a bead mill for 6 hours to obtain particles of an La-Mo-W-based composite oxide. The central particle diameter of the particles of Example 10 was not greater than 100 nm.

The particles of the La-Mo-W-based composite oxide were blended into water (dispersion medium) such that the solid concentration of a finally obtained slurry composition was 1 mass%, and the mixture of these materials was stirred to obtain a slurry composition of Example 10.

### [Example 11]

A slurry composition of Example 11 was obtained in the same manner as in Example 10, except that the raw material powder of the lanthanum compound, the raw material powder of the molybdenum compound, and the raw material powder of the tungsten compound were each weighed such that the mole ratio thereof was 2 : 1.5 : 0.5 (La : Mo : W = 2 : 1.5 : 0.5) to prepare the wet-mixture.

### [Example 12]

A slurry composition of Example 12 was obtained in the same manner as in Example 10, except that the raw material powder of the lanthanum compound, the raw material powder of the molybdenum compound, and the raw material powder of the tungsten compound were each weighed such that the mole ratio thereof was 2 : 0.5 : 1.5 (La : Mo : W = 2 : 0.5 : 1.5) to prepare the wet-mixture.

### [Example 13]

A fired powder was produced in the same manner as in Example 10, and the provisionally fired powder was milled in a pot mill for 75 hours to obtain particles of an La-Mo-W-based composite oxide of Example 13. The central particle diameter of the particles of Example 13 was 800 nm.

The particles of the La-Mo-W-based composite oxide were blended into water (dispersion medium) such that the solid concentration of a finally obtained slurry composition was 10 mass%, and the mixture of these materials was stirred to obtain a slurry composition of Example 13.

### [Example 14]

La(OH)₃ was prepared as the lanthanum compound, and WO₃ was prepared as the tungsten compound. Then, a raw material powder of the lanthanum compound and a raw material powder of the tungsten compound were each weighed such that the mole ratio thereof was 1 : 1 (La : W = 1 : 1). After weighing, each raw material powder was mixed with predetermined ethanol and the obtained wet-mixture was dried to obtain a mixed powder.

Then, the mixed powder was fired under a temperature condition of 700°C for 10 hours in an air atmosphere to obtain a fired powder composed of a reaction product of the lanthanum compound and the tungsten compound.

Then, the obtained fired powder was milled in a bead mill for 4.5 hours to obtain particles of an La-W-based composite oxide. The central particle diameter of the particles of Example 14 was not greater than 100 nm.

The particles of the La-W-based composite oxide were blended into water (dispersion medium) such that the solid concentration of a finally obtained slurry composition was 1 mass%, and the mixture of these materials was stirred to obtain a slurry composition of Example 14.

### [Example 15]

A fired powder was produced in the same manner as in Example 14, and the fired powder was milled in a pot mill for 75 hours to obtain particles of an La-W-based composite oxide of Example 15. The central particle diameter of the particles of Example 15 was 800 nm.

The particles of the La-W-based composite oxide were blended into water (dispersion medium) such that the solid concentration of a finally obtained slurry composition was 1 mass%, and the mixture of these materials was stirred to obtain a slurry composition of Example 15.

### [Comparative Example 1]

A fired powder was produced in the same manner as in Example 1, and the fired powder was milled in a pot mill for 15 hours to obtain La-Mo-based composite oxide particles of Comparative Example 1. The central particle diameter of the La-Mo-based composite oxide particles of Comparative Example 1 was 2300 nm.

The La-Mo-based composite oxide particles were blended into water (dispersion medium) such that the solid concentration of a finally obtained slurry composition was 1 mass%, and the mixture of these materials was stirred to obtain a slurry composition of Comparative Example 1.

### [Comparative Example 2]

A fired powder was produced in the same manner as in Example 1, and the fired powder was milled in a pot mill for 90 hours to obtain La-Mo-based composite oxide particles of Comparative Example 2. The central particle diameter of the La-Mo-based composite oxide particles of Comparative Example 2 was 600 nm.

The La-Mo-based composite oxide particles were blended into water (dispersion medium) such that the solid concentration of a finally obtained slurry composition was 20 mass%, a dispersing agent was further blended (1 mass% with respect to the La-Mo-based composite oxide particles), and the mixture of these materials was stirred to obtain a slurry composition of Comparative Example 2.

### [Measurement of central particle diameter (D50) by laser diffraction method]

The central particle diameters (D50) of the particles of the La-based composite oxides (La-Mo-based composite oxide, La-Mo-W-based composite oxide, La-W-based composite oxide) of Examples 1 to 15 and Comparative Examples 1 and 2 were measured using a laser diffraction particle size distribution device (model "LA-950", manufactured by HORIBA, Ltd.). The measurement conditions are as follows.

### <Measurement conditions>

A sodium hexametaphosphate solution having a concentration of 2 mass% was used as a solution A. A solution obtained by adding La-based composite oxide particles (to be measured) to a sodium hexametaphosphate solution having a concentration of 2 mass% and stirring the solution with a homogenizer to uniformly disperse the La-based composite oxide particles was used as a solution B. A solution C in which the concentration of the La-based composite oxide particles was not greater than 1 mass% and the La-based composite oxide particles were monodispersed was prepared by dropping 0.5 mL of the solution B into the solution A. Then, using the solution C, a particle diameter (D50) at which the cumulative frequency reached 50% was obtained as a central particle diameter using the laser diffraction particle size distribution device. The measurement results of the central particle diameter (D50) in each Example, etc., are shown in Table 1.

The measurement results (central particle diameters) of the La-Mo-based composite oxide particles in Examples 1 to 5, the measurement results (central particle diameters) of the La-Mo-W-based composite oxide particles in Examples 10 to 12, and the measurement result (central particle diameter) of the La-W-based composite oxide particles in Example 14 were not greater than 100 nm. For Examples 1 to 5, 10 to 12, and 14, the particle diameters were measured using an FE-SEM as follows.

### [Measurement of particle diameter by FE-SEM]

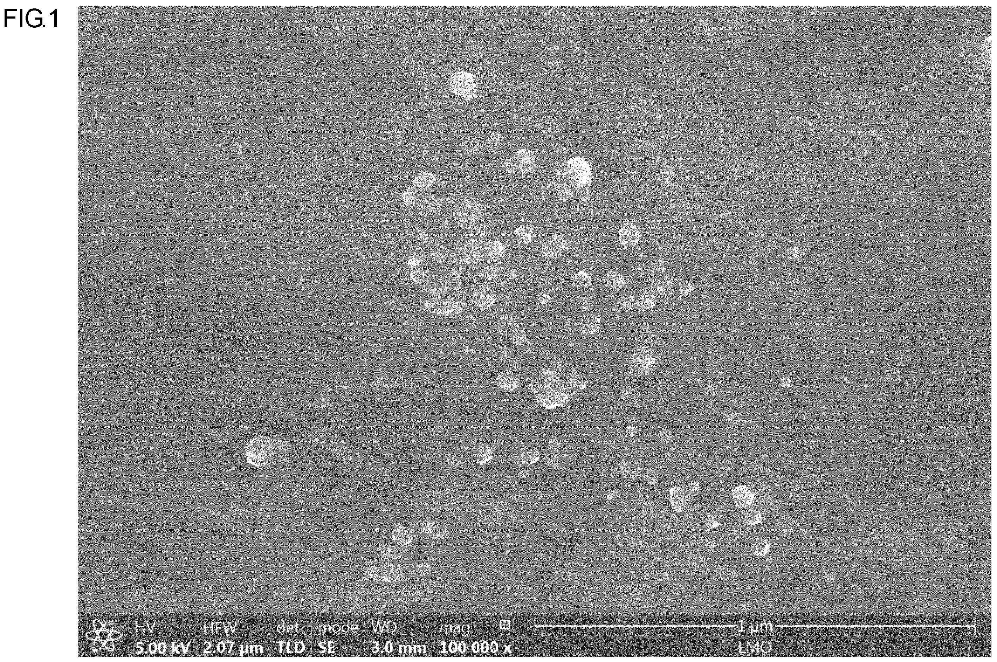

The particle diameters of the La-based composite oxide particles of Examples 1 to 5, 10 to 12, and 14 were obtained using an FE-SEM according to the following procedure. Here, the slurry composition of Example 2 was dropped onto a carbon tape, dried, and used as an object to be measured. In order to suppress aggregation of the particles during drying, a dispersion medium (water or the like) was added to the dropped slurry composition as appropriate to dilute the dropped slurry composition such that individual particles in the slurry composition were allowed to be observed. FIG. 1 shows an SEM image of the La-Mo-based composite oxide particles (La-based composite oxide particles) of Example 2. An SEM image (magnification: 100,000) of the La-Mo-based composite oxide particles of Example 2 was obtained, and multiple individual particles of the La-Mo-based composite oxide particles were extracted as a sample from the SEM image using predetermined image analysis software. Then, an equivalent circle diameter (µm) of each of the extracted individual particles was calculated from an image of each of the extracted individual particles using analysis software WinROOF2018. The particle diameter (average particle diameter) of the La-Mo-based composite oxide particles was calculated from the results of the multiple equivalent circle diameters (µm) obtained as described above. As a result, the particle diameters (average particle diameters) of the La-Mo-based composite oxide powders of Examples 1 to 5 were 0.05 µm (50 nm, reference value).

### [Appearance of slurry composition and re-dispersion]

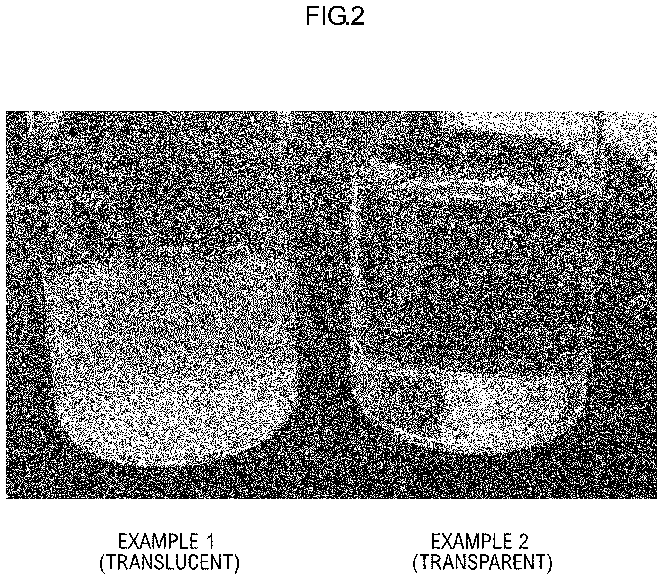

As shown in FIG. 2, 30 ml of each slurry composition was placed in a vial having a capacity of 50 ml, and ultrasonic vibration was applied thereto for 10 minutes in a desktop ultrasonic cleaner (product name "US-KS", manufactured by SND). Then, the appearance of the slurry composition was visually observed to check for color and the presence or absence of precipitation. In addition, the possibility or impossibility of re-dispersion was determined by the presence or absence of sedimentation of the La-based composite oxide particles after dispersion. The results are shown in Table 1.

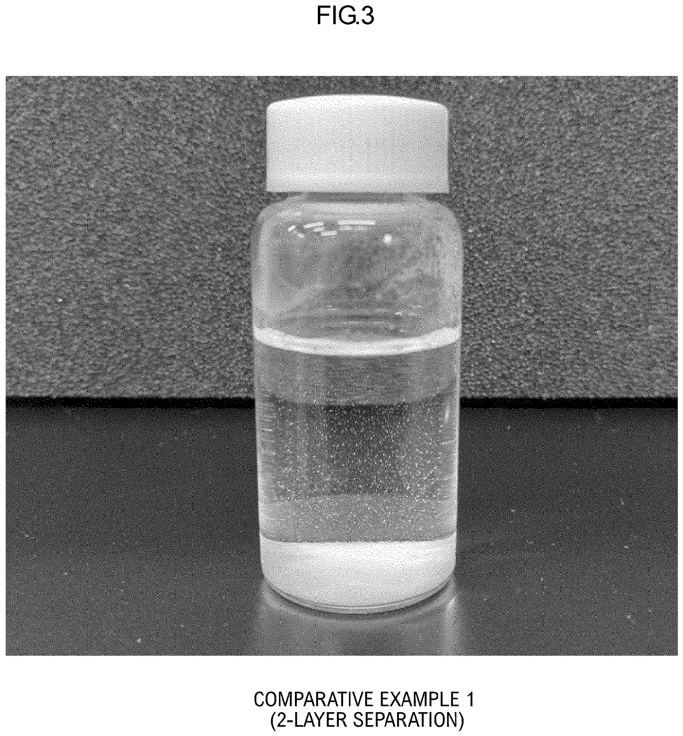

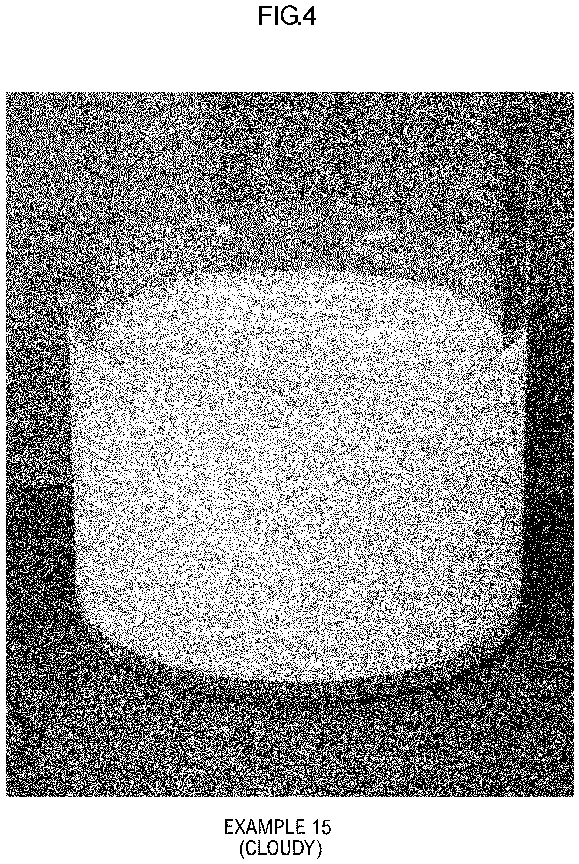

FIG. 2 shows appearance photographs of the respective slurry compositions of Examples 1 and 2, and FIG. 3 shows an appearance photograph of the slurry composition of Comparative Example 1. FIG. 4 shows an appearance photograph of the slurry composition of Example 15.

### [Precipitation]

After ultrasonic vibration was applied to each slurry composition as described above, each slurry composition was allowed to stand. The presence or absence of precipitation was determined by observing the appearance of each slurry composition when 10 minutes elapsed after being left to stand.

### [Transmittance of slurry composition]

A transmittance τ of the slurry composition of Example 2 was obtained by a method described below. The transmittance τ of the composition of Example 2 is obtained from τ = 10^{-a}. In the formula, a is the absorbance of the solids in the slurry composition. The absorbance a is obtained from a = aₙ - a₀. Here, aₙ represents the absorbance of the slurry composition of Example 2, and a₀ represents the absorbance of water only (blank). The absorbance aₙ and the absorbance a₀ were measured using a UV/visible spectrophotometer under measurement conditions shown below.

### <Measurement conditions>

Measuring equipment: UV/visible spectrophotometer (product number: Evolution 201) manufactured by LMS Co., Ltd.
Measurement range: 360 nm to 800 nm (visible light range)
Scanning speed: 1200.00 nm/min
Data interval: 1 nm
Integration time: 0.050 sec
Band width: 1 nm
Baseline correction: 100%T

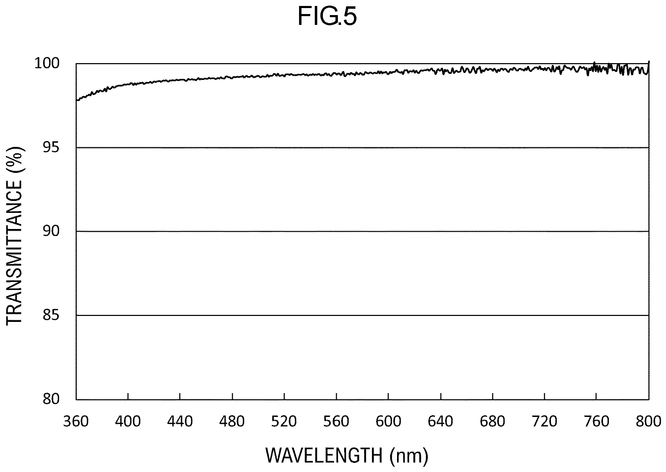

FIG. 5 shows the results of the transmittance (%) of the slurry composition of Example 2. In FIG. 5, the horizontal axis represents wavelength (nm), and the vertical axis represents transmittance (%). The maximum value of the transmittance (%) was 100%, and the minimum value of the transmittance (%) was 97.6%.

### [Fixability]

On the surface of a glass substrate, 2 ml of each of slurry compositions of Example 1, etc., was dropped using a pipette, and the dispersion medium was evaporated. In the case of Example 4, after the slurry composition was adhered to the surface of the substrate, UV light was applied thereto for 30 seconds. The adhesive surface of an adhesive tape was attached to the slurry composition adhered to the surface of the substrate, and then whether or not the slurry composition was peeled off from the surface of the substrate by peeling off the adhesive tape was checked with an SEM. Such a tape peeling test was performed up to 20 times for each slurry composition. If the slurry composition was peeled off when the tape peeling test was performed 3 or fewer times, the result was indicated as "1". If the slurry composition was peeled off when the tape peeling test was performed 4 to 10 times, the result was indicated as "2". If the slurry composition was not peeled off even when the tape peeling test was performed 11 or more times, the result was indicated as "3". The results are shown in Table 1.

### [Aggregation after application and drying]

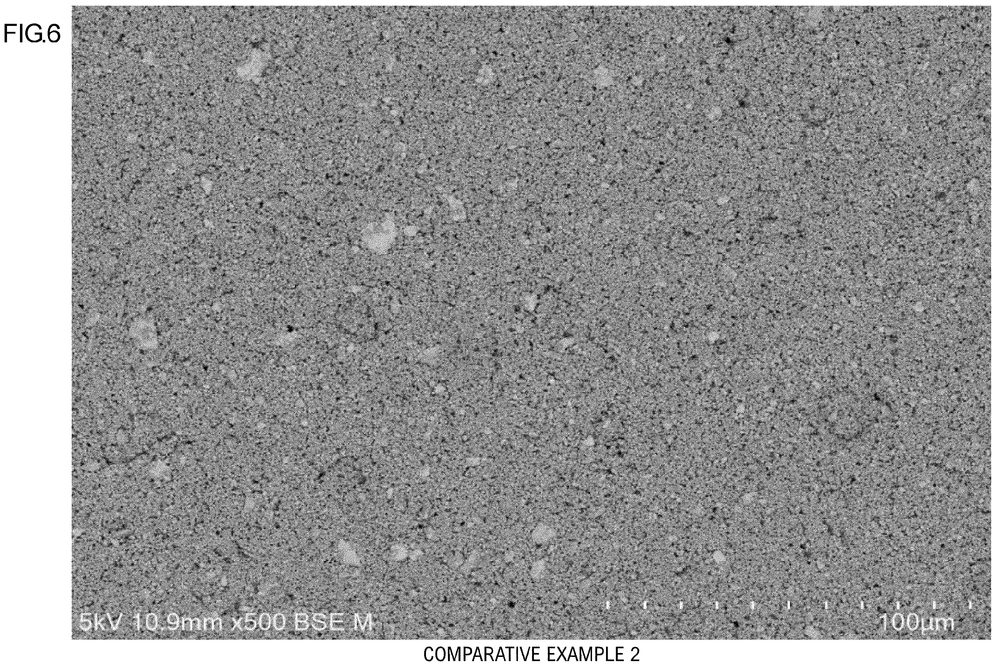

On the surface of a glass substrate, 2 ml of each slurry composition of Example 1, etc., was dropped using a pipette, and then the dispersion medium was evaporated. An image was obtained by a scanning electron microscope at an acceleration voltage of 5 kV. The magnification was adjusted as appropriate on the basis of the size of aggregated particles. The case where particles were continuous over 50 µm or more in the image obtained by the scanning electron microscope was defined as "aggregation". The results are shown in Table 1. FIG. 6 shows an SEM image (magnification: 500) of the La-Mo-based composite oxide particles (La-based composite oxide particles) of Comparative Example 2 adhered to the surface of the substrate.

**[Table 1]**

| | Slurry composition | | | | | | |
|---|---|---|---|---|---|---|---|
| | La-based composite oxide particles | | | | | Dispersion medium | Other blending material |
| | Type | Milling method | Milling time (hr) | Central particle diameter (nm) | Solid concentration (mass%) | | |
| Example 1 | La₂Mo₂O₉ | Bead mill | 4.5 | 100 or less | 1 | Water | None |
| Example 2 | La₂Mo₂O₉ | Bead mill | 4.5 | 100 or less | 1 | Water | Dispersing agent |
| Example 3 | La₂Mo₂O₉ | Bead mill | 4.5 | 100 or less | 1 | Water | Binder, Dispersing agent |
| Example 4 | La₂Mo₂O₉ | Bead mill | 4.5 | 100 or less | 1 | Water | Ultraviolet-curable resin, Dispersing agent |
| Example 5 | La₂Mo₂O₉ | Bead mill | 4.5 | 100 or less | 8 | Water | Dispersing agent |
| Example 6 | La₂Mo₂O₉ | Pot mill | 90 | 600 | 1 | Water | Dispersing agent |
| Example 7 | La₂Mo₂O₉ | Bead mill | 4.5 | 150 | 1 | Ethanol | Dispersing agent |
| Example 8 | La₂Mo₂O₉ | Pot mill | 75 | 800 | 1 | Water | Dispersing agent |
| Example 9 | La₂Mo₂O₉ | Pot mill | 70 | 800 | 10 | Water | Dispersing agent |
| Example 10 | La₂MoWO₉ | Bead mill | 6 | 100 or less | 1 | Water | None |
| Example 11 | La₂Mo_{1.5}W_{0.5}O₉ | Bead mill | 6 | 100 or less | 1 | Water | None |
| Example 12 | La₂MO_{0.5}W_{1.5}O₉ | Bead mill | 6 | 100 or less | 1 | Water | None |
| Example 13 | La₂MOWO₉ | Pot mill | 75 | 800 | 10 | Water | Dispersing agent |
| Example 14 | La₂W₂O₉ | Bead mill | 4.5 | 100 or less | 1 | Water | None |
| Example 15 | La₂W₂O₉ | Pot mill | 75 | 800 | 1 | Water | Dispersing agent |
| Comparative Example 1 | La₂Mo₂O₉ | Pot mill | 15 | 2300 | 1 | Water | None |
| Comparative Example 2 | La₂Mo₂O₉ | Pot mill | 90 | 600 | 20 | Water | Dispersing agent |

| | Evaluation | | | | |
|---|---|---|---|---|---|
| | Appearance | Re-dispersion | Precipitation after 10 minutes of application of ultrasonic waves | Fixability | Aggregation after application and drying |
| Example 1 | Translucent | Possible | Absence | 1 | Absence |
| Example 2 | Transparent | Possible | Absence | 1 | Absence |
| Example 3 | Transparent | Possible | Absence | 2 | Absence |
| Example 4 | Transparent | Possible | Absence | 3 | Absence |
| Example 5 | Translucent | Possible | Absence | 1 | Absence |
| Example 6 | Cloudy | Possible | Absence | 1 | Absence |
| Example 7 | Translucent | Possible | Absence | 1 | Absence |
| Example 8 | Cloudy | Possible | Absence | 1 | Absence |
| Example 9 | Cloudy | Possible | Absence | 1 | Absence |
| Example 10 | Translucent | Possible | Absence | 1 | Absence |
| Example 11 | Translucent | Possible | Absence | 1 | Absence |
| Example 12 | Translucent | Possible | Absence | 1 | Absence |
| Example 13 | Cloudy | Possible | Absence | 1 | Absence |
| Example 14 | Translucent | Possible | Absence | 1 | Absence |
| Example 15 | Cloudy | Possible | Absence | 1 | Absence |
| Comparative Example 1 | 2-Layer separation | Impossible | Presence | 1 | Unable to apply |
| Comparative Example 2 | Cloudy | Possible | Presence | 1 | Presence |

As shown in Table 1, in each of the slurry compositions of Examples 1 to 9, re-dispersion was possible in the state after 10 minutes of application of ultrasonic vibration. The slurry compositions of Examples 2, 3, and 4 were transparent, the slurry compositions of Examples 1, 5, and 7 were translucent, and the slurry compositions of Examples 6, 8, and 9 were cloudy. Each of the slurry compositions of Examples 1 to 9 was capable of being applied to the target object. Furthermore, no precipitation of the La-Mo-based composite oxide particles was observed in each of the slurry compositions of Examples 1 to 9 even after the slurry composition was allowed to stand for 10 minutes. Moreover, for each of the slurry compositions of Examples 1 to 9, in a state where the dispersion medium was evaporated after the slurry composition was applied to the target object, a state where particles were continuous over 50 µm or more was not observed, and no aggregation of the La-Mo-based composite oxide particles was observed.

On the other hand, in the slurry composition of Comparative Example 1, the La-Mo-based composite oxide particles and the dispersion medium were separated into two layers when ultrasonic vibration was applied for 10 minutes, and re-dispersion was impossible. Therefore, the slurry composition of Comparative Example 1 was not able to be applied to the target object. This is considered to be due to the fact that the central particle diameter of the La-Mo-based composite oxide particles according to Comparative Example 1 is 2300 nm.

The slurry composition of Comparative Example 2 was cloudy in the state after 10 minutes of application of ultrasonic vibration, and re-dispersion of the La-Mo-based composite oxide particles was possible therein. However, precipitation of the La-Mo-based composite oxide particles was observed in the state after being left to stand for 10 minutes after the end of application of ultrasonic vibration. In addition, as shown in FIG. 5, aggregation of the La-Mo-based composite oxide particles was observed after application to the target object and drying. This is considered to be due to the fact that the concentration of the La-Mo-based composite oxide particles in the slurry composition according to Comparative Example 2 is 20 mass%.

It was confirmed that the slurry composition of Example 4 containing the ultraviolet-curable resin had the most excellent fixability (adhesion) to the target object. It was also confirmed that the slurry composition of Example 3 containing the binder therein had excellent fixability (adhesion) to some extent.

As shown in Table 1, in each of the slurry compositions of Examples 10 to 15, re-dispersion was possible in the state after 10 minutes of application of ultrasonic vibration, as in Example 1, etc. described above. The slurry compositions of Examples 10, 11, 12, and 14 were translucent as in Example 1, etc., and the slurry compositions of Examples 13 and 15 were cloudy as in Example 9, etc. Each of the slurry compositions of Examples 10 to 15 was capable of being applied to the target object as in Example 1, etc. Furthermore, no precipitation of the La-based composite oxide particles (La-Mo-W-based composite oxide particles, La-W-based composite oxide particles) was observed in each of the slurry compositions of Examples 10 to 15 even after the slurry composition was allowed to stand for 10 minutes. Moreover, for each of the slurry compositions of Examples 10 to 15, in a state where the dispersion medium was evaporated after the slurry composition was applied to the target object, a state where particles were continuous over 50 µm or more was not observed, and no aggregation of the La-based composite oxide particles was observed.

## Claims

1. A slurry composition comprising: particles of a complex oxide containing La and at least one element selected from the group consisting of Mo and W; and a dispersion medium, wherein
a central particle diameter of the particles is not greater than 800 nm, and
a content of the particles is 0.1 to 10 mass%.

2. The slurry composition according to claim 1, wherein the complex oxide is La₂MoₓW_{(2-X)}O₉ (0 ≤ x ≤ 2).

3. The slurry composition according to claim 1 or 2, further comprising a binder.

4. The slurry composition according to any one of claims 1 to 3, further comprising a dispersing agent.

5. The slurry composition according to any one of claims 1 to 4, further comprising an ultraviolet-curable resin.

6. A coating agent comprising the slurry composition according to any one of claims 1 to 5.
